# EUROPÄISCHE PATENTSCHRIFT

(11) **EP 3 763 217 B1**
(45) Veröffentlichungstag und Bekanntmachung des Hinweises auf die Patenterteilung: **22.09.2021**
(21) Anmeldenummer: 19185057.7
(22) Anmeldetag: 08.07.2019
(51) Int. Cl.: A23K 10/20, A22C 5/00, A22C 7/00, A22C 17/00, A22C 18/00, A23L 13/00

(54) **VERFAHREN ZUR HERSTELLUNG VON FLEISCHHALTIGER TIERNAHRUNG**
METHOD FOR THE PREPARATION OF ANIMAL FEED CONTAINING MEAT
PROCÉDÉ DE FABRICATION D'ALIMENTS POUR ANIMAUX CONTENANT DE LA VIANDE

(43) Veröffentlichungstag der Anmeldung: 13.01.2021
(73) Patentinhaber: Bühler AG, 9240 Uzwil (CH)
(72) Erfinder: MUNZ, Konrad, 9215 Schönenberg (CH)
(74) Vertreter: Hepp Wenger Ryffel AG

(56) Entgegenhaltungen:
- WO-A1-2018/152346
- US-A- 5 405 632
- US-A- 5 965 184

## Beschreibung

Die vorliegende Erfindung betrifft eine Anlage und ein Verfahren zur Herstellung von fleischhaltiger Tiernahrung, insbesondere Heimtiernahrung.

Im Gebiet der Tiernahrungsmittel gibt es einen starken Trend zur Bereitstellung von Produkten, welche sich durch einen sehr hohen Fleischanteil auszeichnen. Die Bereitstellung eines Nahrungsmittels mit hohem Fleischanteil stellt aber gleichzeitig eine hohe Herausforderung dar.

Fleisch hat typischerweise einen signifikanten Feuchtigkeitsgehalt, so dass eine Erhöhung des Fleischanteils in einem Nahrungsprodukt zu einer Erhöhung dessen Feuchtigkeitsgehalts führt.

Fleischhaltige Nahrungsmittel werden üblicherweise durch ein Verfahren hergestellt, welches mindestens einen Extrusionsschritt umfasst. Für diesen Extrusionsschritt ist aber der Feuchtigkeitsgehalt des zu extrudierenden Materials ein limitierender Faktor. Beim Austritt aus dem Extruder hat das Fleischmaterial üblicherweise einen Feuchtigkeitsgehalt von 26 bis 29% und eine Temperatur von 120-140°C.

Zudem wird die Textur des extrudierten Fleischmaterials durch den Feuchtigkeitsgehalt beeinflusst. Beim Austritt aus dem Extruder wird das Fleischmaterial zerkleinert und abgekühlt verdampften Teil der im Fleischmaterial enthaltenen Feuchtigkeit, was zu einer Expansion des Materials führt. Bei zu hohem Feuchtigkeitsgehalt bleibt das Material elastisch und klebrig, weswegen es nicht zufriedenstellend geschnitten werden kann und zudem zum Zusammenkleben neigt.

Einer Erhöhung des Fleischanteils in einem Nahrungsprodukt stehen somit die damit verbundene Erhöhung des Feuchtigkeitsgehalts des Nahrungsprodukts und die sich daraus ergebenden vorstehend beschriebenen herstellungstechnischen Probleme entgegen.

In der GB-1 371 817 ist ein Verfahren zur Herstellung von Fleischprodukten beschrieben, bei welchem Fleisch zunächst vorgekocht wird, wodurch ein Teil des im Material gebundenen Wassers freigesetzt und durch einen üb der Material geleiteten Strom heissen Gases entfernt wird, und anschliessend einer Mikrowellenbehandlung unterzogen wird. Dieses Verfahren ist apparativ aufwendig. Die aus dem Material freigesetzte Feuchtigkeit wird nicht als Nebenprodukt gewonnen.

In der WO2018/152346 A1 sind ein Verfahren und eine Anlage beschrieben zur Herstellung von fleischhaltiger Tiernahrung.

Es war die Aufgabe der vorliegenden Erfindung, eine Vorrichtung und ein Verfahren zur Herstellung von fleischhaltiger Tiernahrung bereitzustellen, welche die Erhöhung des Fleischanteils in der Tiernahrung auf einfache, effiziente und ökonomische Weise ermöglichen.

Diese Aufgabe wird durch den Gegenstand der unabhängigen Ansprüche der vorliegenden Anmeldung gelöst.

Die vorliegende Erfindung betrifft eine Anlage zur Herstellung von fleischhaltiger Tiernahrung, umfassend
- einen Anlagenteil zur Vorerwärmung von Fleischmaterial,
- eine Vorrichtung zum Abtrennen von Feuchtigkeit aus einem vorerwärmten Fleischmaterial mit
   i. einem Einlass für das vorerwärmte Fleischmaterial am oberen Ende der Vorrichtung
   ii. einer Abtrenneinheit zum Abtrennen von Feuchtigkeit vom vorerwärmten Fleischmaterial, wobei die Abtrenneinheit in der Vorrichtung, insbesondere parallel zu einer Wandung der Vorrichtung, angeordnet ist, sodass zwischen der Wandung der Vorrichtung und der Abtrenneinheit ein Kompartiment zur Aufnahme der abgetrennten Feuchtigkeit ausgebildet ist,
   iii. einem mit diesem Kompartiment verbundenen Auslass für die abgetrennte Feuchtigkeit, und
   iv. einem Auslass für das von Feuchtigkeit befreite Fleischmaterial am unteren Ende der Vorrichtung, wobei der Einlass der Vorrichtung mit dem Anlagenteil zur Vorerwärmung von Fleischmaterial über Zuführleitungen verbunden ist,
einen Anlagenteil zur Weiterverarbeitung des von Feuchtigkeit befreiten Fleisches zu fleischhaltiger Tiernahrung.

Es wurde erfindungsgemäss überraschend gefunden, dass der Fleischanteil in einem Tiernahrungsprodukt auf einfache und ökonomische Weise erhöht werden kann, wenn die bei einer üblichen Vorerwärmung des Fleischmaterials aus dem Fleischmaterial entfernte Feuchtigkeit von dem Fleischmaterial abgetrennt wird, bevor das Fleischmaterial aus übliche Weise (beispielweise in einem Vorkonditionierer/Extruder-System) zum gewünschten Nahrungsprodukt verarbeitet wird. Das beispielsweise dem Vorkonditionierer/Extruder-System zugeführte Material kann aufgrund der Verringerung des Feuchtigkeitsgehalts einen deutlich erhöhten Fleischanteil aufweisen.

Erfindungsgemäss erfolgt die Abtrennung von Feuchtigkeit von dem Fleischmaterial auf einfache und ökonomische Weise in der hier beschriebenen Vorrichtung zum Abtrennen von Feuchtigkeit. Die vorliegende Erfindung vermeidet herkömmliche teure und energieintensive Trocknungsausrüstung. Die Abtrennung der Feuchtigkeit erfolgt erfindungsgemäss lediglich durch Schwerkraft (insbesondere durch Filtration); dies erlaubt eine apparativ weniger aufwändige Ausgestaltung der Vorrichtung im Vergleich zu Trennverfahren, die auf unterschiedlicher Dichte basieren (Zentrifugation, Dekantierung, etc.).

Erfindungsgemäss bevorzugt ist die Abtrenneinheit zum Abtrennen von Feuchtigkeit aus einem vorerwärmten Fleischmaterial trichterförmig, d.h. die Vorrichtung verjüngt sich in der bestimmungsgemässen Anordnung von der Oberseite zur Unterseite. Die insbesondere parallel zu einer Wandung (z.B. Seitenwand oder Boden) der Vorrichtung angeordnete Abtrenneinheit ist entsprechend geneigt, vorzugsweise um 10-45° relativ zu einem vertikalen Lot.

Bevorzugt ist die Vorrichtung zum Abtrennen von Feuchtigkeit geschlossen, d.h. sie ist mit Ausnahme der näher beschriebenen Einlässe und Auslässe von der Umgebung abgeschlossen.

Das vorerwärmte Fleischmaterial durchläuft die Vorrichtung zum Abtrennen von Feuchtigkeit aus einem vorerwärmten Fleischmaterial von oben nach unten, unter Einfluss der Gravitation. Das vorerwärmte Fleischmaterial wird durch einen Einlass am oberen Ende der Vorrichtung eingeführt. Der Einlass kann das Ende eines aus dem vorgeschalteten Anlagenteil zur Vorerwärmung von Fleischmaterial kommendes Rohr sein. Vorzugsweise kann der Einlass eine Absperreinheit wie eine Schleuse aufweisen, um den Eintritt von Material in die Vorrichtung kontrollieren zu können.

Am unteren Ende der Vorrichtung zum Abtrennen von Feuchtigkeit ist ein Auslass für das von Feuchtigkeit befreite Fleischmaterial bereitgestellt. Durch diesen Auslass verlässt das von Feuchtigkeit befreite Fleischmaterial die Vorrichtung. Der Auslass kann der Anfang eines in ein nachgeschaltetes Anlagenteil zur Weiterverarbeitung des von Feuchtigkeit befreiten Fleisches zu fleischhaltiger Tiernahrung führenden Rohres sein. Vorzugsweise kann der Auslass eine Absperreinheit wie eine Schleuse aufweisen, um den Austritt von Material aus der Vorrichtung kontrollieren zu können.

In der Vorrichtung zum Abtrennen von Feuchtigkeit befindet sich eine Abtrenneinheit zum Abtrennen von Feuchtigkeit vom vorerwärmten Fleischmaterial. Diese Abtrenneinheit ist insbesondere parallel zu einer Wandung der Vorrichtung angeordnet, sodass zwischen der Wandung der Vorrichtung und der Abtrenneinheit ein Kompartiment zur Aufnahme der abgetrennten Feuchtigkeit ausgebildet ist. Die Abtrenneinheit ist vorzugsweise eine Perforationen aufweisende Platte, wobei die Perforationen eine Grösse aufweisen, durch welche die Feuchtigkeit hindurchtreten kann, aber nicht das Fleisch. Auf diese Weise wird die Feuchtigkeit vom Fleischmaterial abgetrennt, während sich das Fleischmaterial durch die Vorrichtung von oben nach unten bewegt.

Material und Dicke der Platte sind nicht wesentlich. Erfindungsgemäss bevorzugt ist eine Platte ein Dünnschichtmaterial wie eine Folie mit einer Dicke von 0.01 bis 1 cm, kann aber auch eine grössere Dicke von 1 bis 5 cm aufweisen.

Die erfindungsgemässe Vorrichtung zum Abtrennen von Feuchtigkeit weist einen mit dem zwischen der Wandung der Vorrichtung und der Abtrenneinheit ausgebildeten Kompartiment verbundenen Auslass für die abgetrennte Feuchtigkeit auf. Die Feuchtigkeit und das fleischhaltige Material werden somit aus der erfindungsgemässen Vorrichtung durch zwei getrennte Ströme abgeführt.

Im Fall der Verarbeitung von fleischhaltigem Material wird in der erfindungsgemässen Vorrichtung als Feuchtigkeit Leimwasser abgetrennt. Unter Leimwasser wird eine wässrige Flüssigkeit verstanden, welche Bestandteile wie Proteine oder Fette enthält und beispielsweise zur Herstellung weiterer Nahrungsmittel eingesetzt werden kann. Dieses Leimwasser kann erfindungsgemäss auf einfache Weise abgetrennt und einem Lagerbehälter wie einen Tank zugeführt werden, wo es für eine allfällige weitere Verwendung aufbewahrt werden kann. Erfindungsgemäss handelt es sich bei der abgetrennten Feuchtigkeit nicht um ein Abfallprodukt, sondern um ein wertvolles weiter verwendbares Nebenprodukt. Dies ist ein erheblicher ökonomischer Vorteil der vorliegenden Erfindung, welcher sich beispielsweise mit herkömmlichen Trocknungsvorrichtungen, welche auf Basis der Verdampfung der Feuchtigkeit funktionieren, nicht oder nur mit erheblichem Aufwand realisieren liesse.

Der Auslass für die abgetrennte Feuchtigkeit ist erfindungsgemäss bevorzugt über ein Rohr oder ein anderes geeignetes Leitungssystem mit einem Lagerbehälter verbunden, sodass die Feuchtigkeit, vorzugsweise Leimwasser, aus der Vorrichtung zum Abtrennen von Feuchtigkeit in den Lagerbehälter überführt werden kann. Vorzugsweise kann der Auslass eine Absperreinheit wie eine Schleuse aufweisen, um den Austritt von Feuchtigkeit, vorzugsweise Leimwasser, aus der Vorrichtung kontrollieren zu können.

Das in der erfindungsgemässen Vorrichtung zum Abtrennen von Feuchtigkeit zu verarbeitende Fleischmaterial ist vorerwärmt. In üblichen fleischverarbeitenden Anlagen wird das Fleisch aus einer Kühlstufe kommend eingespeist und weist typischerweise eine Temperatur im Bereich von 0 bis 5°C und einen Feuchtigkeitsgehalt von 70-80% auf.

Das Fleischmaterial kann der Anlage aus einem Zwischenlagerbehälter zugeführt werden, welcher vorzugsweise trichterförmig ist. In diesen Zwischenlagerbehälter kann das Fleischmaterial direkt aus Tankwagen gepumpt werden, oder alternativ aus herkömmlichen Transportwagen in einen Schneckenförderer eingebracht werden, mit dessen Hilfe das Fleischmaterial in den Zwischenlagerbehälter gefördert werden kann.

Das Fleischmaterial durchläuft üblicherweise zunächst eine Vorerwärmungsstufe, bevor es der eigentlichen Verarbeitungsstufe zugeführt wird. Erfindungsgemäss bevorzugt wird das Fleischmaterial der Vorerwärmungsstufe mit Hilfe einer Dosierpumpe aus dem Zwischenlagerbehälter zugeführt.

Derartige Vorerwärmungsstufen sind bekannt. Erfindungsgemäss bevorzugt wird die Vorerwärmungsstufe in einem Anlagenteil durchgeführt, der einen Schabewärmetauscher umfasst. Schabewärmetauscher sind bekannt und kommerziell erhältlich. In einem Schabewärmetauscher befindet sich ein inneres Rohr für den Materialstrom, in welchem ein mit Klingen versehener Schaft rotiert. Die Klingen kratzen kontinuierlich Material von der Innenseite dieses Rohres ab und transportieren das Material durch den Schabewärmetauscher. Das innere Rohr ist von einem äusseren Rohr umgeben, in welchem sich ein erwärmtes Fluid, vorzugsweise Wasser oder ein Gas wie Wasserdampf befindet, das das im inneren Rohr beförderte Material erwärmt.

Erfindungsgemäss bevorzugt wird ein Schabewärmetauscher eingesetzt, der eine Länge von 1-5 m, vorzugsweise 1,5-3 m, besonders bevorzugt 2 m, und einen Durchmesser des inneren Rohes, in welchem das Material befördert wird, von 20-60 mm, vorzugsweise 30-50 mm aufweist. Als Fluid im äusseren Rohr wird vorzugsweise Wasserdampf eingesetzt.

Da in einem Schabewärmetaischer eine indirekte Erwärmung durchgeführt wird und das Material somit nicht in direkten Kontakt mit dem heissen Fluid kommt, wird das Fleischmaterial nicht zusätzlich mit Feuchtigkeit angereichert. Theoretisch könnte das erfindungsgemässe Verfahren auch mit einem Vorerhitzer mit Dampfdirekteinspeisung durchgeführt werden; dies würde aber zu einer unerwünschten Anreicherung des Fleischmaterials mit Feuchtigkeit führen.

In der Vorerwärmungsstufe, vorzugsweise in einem Schabewärmetauscher, wird das Fleischmaterial derart erwärmt, dass Feuchtigkeit austritt und somit von dem Fleischmaterial entfernt wird. Erfindungsgemäss bevorzugt ist eine Erwärmung auf eine Temperatur von 75-100°C, bevorzugt 90-100°C. Oberhalb von 75°C koaguliert das Fleisch und bildet agglomerierte Klumpen, wie Hackfleisch in einer heissen Pfanne. Hierbei tritt ein Teil des im Fleischmaterial enthaltenen Wasser aus. Es wird ein Zweiphasensystem ausgebildet, welches sich anschliessend, wie vorstehend beschrieben, in der erfindungsgemässen Vorrichtung zum Abtrennen von Feuchtigkeit aus einem vorerwärmten Fleischmaterial auf einfache und ökonomische Weise separieren lässt.

Erfindungsgemäss bevorzugt ist die Vorerwärmungsstufe, vorzugsweise der Schabewärmetauscher, mit der Vorrichtung zum Abtrennen von Feuchtigkeit aus einem vorerwärmten Fleischmaterial durch ein Rohr verbunden. Durch das Rohr kann das Fleischmaterial zur vorstehenden Vorrichtung befördert werden, beispielsweise gepumpt werden.

Der Vorrichtung zum Abtrennen von Feuchtigkeit aus einem vorerwärmten Fleischmaterial nachgeschaltet ist ein Anlagenteil zur Weiterverarbeitung des von Feuchtigkeit befreiten Fleisches zu fleischhaltiger Tiernahrung.

Derartige Einheiten sind bekannt. Erfindungsgemäss bevorzugt ist diese Einheit ausgewählt aus der Gruppe bestehend aus einem Extruder, einem Vorkonditionierer, und einer Kombination davon.

Erfindungsgemäss besonders bevorzugt wird ein Vorkonditionierer/Extruder-System eingesetzt. Derartige Systeme sind hinlänglich bekannt und können beispielsweise einen Vorkonditionierer wie den Vorkonditionierer POLYtherm™ der Firma Bühler und einen herkömmlichen Zwei- oder Mehrwellenextruder umfassen.

Erfindungsgemäss bevorzugt ist die Einheit zur Weiterverarbeitung mit der Vorrichtung zum Abtrennen von Feuchtigkeit aus einem vorerwärmten Fleischmaterial durch ein Rohr verbunden. Durch das Rohr kann das Fleischmaterial zur Einheit zur Weiterverarbeitung befördert werden, beispielsweise gepumpt.

Erfindungsgemäss sind die Vorerwärmungsstufe, die Vorrichtung zum Abtrennen von Feuchtigkeit aus einem vorerwärmten Fleischmaterial und die Stufe zur Weiterverarbeitung des Fleischmaterials in einer Anlage zusammengefasst.

Die vorliegende Erfindung betrifft weiterhin ein Verfahren zur Herstellung von fleischhaltiger Tiernahrung, umfassend die Schritte:
a) Vorerwärmen von Fleisch, sodass Feuchtigkeit aus dem Fleisch entfernt wird,
b) Abtrennen des vorerwärmten Fleisches von der aus dem Fleisch entfernten Feuchtigkeit,
c) Verarbeitung des von der Feuchtigkeit abgetrennten Fleisches dadurch gekennzeichnet, dass Schritt b) in einer Vorrichtung wie vorstehend beschrieben durchgeführt wird.

Mit der erfindungsgemässe Anlage und dem erfindungsgemässen verfahren können vorzugsweise 500 bis 2000 kg Fleisch pro Minute verarbeitet werden.

Obwohl Fleisch das erfindungsgemäss vornehmlich zu verarbeitende Material ist, kann die vorliegende Erfindung grundsätzlich zur Verarbeitung jeglichen proteinhaltigen Materials eingesetzt werden.

Wie vorstehend ausgeführt wird das Fleischmaterial der Anlage vorzugsweise aus einer Kühlstufe zugeführt und weist üblicherweise eine Temperatur von 0 bis 5°C auf. Das Fleischmaterial wird vorzugsweise wie vorstehend beschrieben über einen Zwischenlagerbehälter zugeführt und gelangt durch ein Rohr in die Vorerwärmungseinheit, vorzugsweise einen Schabewärmetauscher wie vorstehend beschrieben.

Das Fleischmaterial verlässt die Vorerwärmungseinheit vorzugsweise mit einer Temperatur von 75-100°C, bevorzugt 90-100°C, und liegt als Zweiphasensystem vor. In diesem Zustand wird es durch den Einlass der Vorrichtung zum Abtrennen von Feuchtigkeit aus einem vorerwärmten Fleischmaterial eingeleitet und während des Durchtritts von oben nach unten durch die Vorrichtung von der Feuchtigkeit getrennt. Die Feuchtigkeit, vorzugsweise Leimwasser, tritt durch die Perforationen aufweisende Platte in ein zwischen der Platte und einer Wandung ausgebildetes Kompartiment und von dort durch den vorstehend beschriebenen Auslass vorzugsweise in einen Lagerbehälter. Das Fleischmaterial kann nicht durch die Perforationen der Platte treten und gelangt am unteren Ende der Vorrichtung durch den dort vorhandenen Auslass aus der Vorrichtung heraus.

Von diesem Auslass gelangt das von Feuchtigkeit befreite Fleischmaterial durch das vorstehend beschriebene Leitungssystem, vorzugsweise ein Rohr, in die vorstehend beschriebene Stufe zur Weiterverarbeitung des Fleischmaterials. Dort wird das Fleischmaterial wie vorstehend beschrieben auf übliche Weise zu einem Tiernahrungsprodukt weiterverarbeitet.

Da das Fleischmaterial der Stufe zur Weiterverarbeitung in einem vorerwärmten Zustand zugeführt wird, vorzugsweise mit einer Temperatur von 75-100°C, bevorzugt 90-100°C, muss im Vorkonditionierer erheblich weniger Wasserdampf eingesetzt werden. Zusammen mit der erfindungsgemässen Abtrennung von Feuchtigkeit vom Fleischmaterial hat dies zur Folge, dass der Fleischgehalt im Tiernahrungsmittel erhöht werden kann, beispielsweise von 20-25% auf 25-30%. Auch höhere Fleischgehalte (absolut; bspw. 30-35%, 35-40%, 40-45%) und/oder grössere relative Unterschiede der Fleischgehalte vor und nach der Abtrennung der Feuchtigkeit (bspw. 5-10%, 10-15%, 15-20%) sind erfindungsgemäss erzielbar.

Weiterhin ist die erfindungsgemässe Vorerwärmungsstufe auch aus Gründen der Nahrungsmittelsicherheit vorteilhat. Das auf eine Temperatur von 75-100°C, bevorzugt 90-100°C, gebrachte Fleischmaterial kann unter diesen Bedingungen für einen längeren Zeitraum gehalten und bearbeitet werden, ohne dass Beeinträchtigungen der Nahrungsmittelqualität zu befürchten sind. Würde das Fleischmaterial dem Extruder in kaltem Zustand zugeführt, wäre eine längere Behandlungszeit nicht möglich.

Die abgetrennte Feuchtigkeit, vorzugsweise Leimwasser, kann beispielsweise bei erhöhter Temperatur von 75-100°C, bevorzugt 90-100°C gelagert und bei Bedarf zur Herstellung von beispielsweise Standard-Nahrungsmitteln (ohne erhöhten Fleischanteil) eingesetzt werden.

Die vorliegende Erfindung wird nachstehend anhand von nicht einschränkenden Ausführungsformen und Zeichnungen näher erläutert. Es zeigen:
- Fig. 1: eine schematische Ansicht einer Ausführungsform einer erfindungsgemässen Anlage zur Herstellung von fleisch-haltiger Tiernahrung
- Fig. 2: eine schematische Ansicht einer Ausführungsform einer erfindungsgemässen Vorrichtung zum Abtrennen von Feuch-tigkeit aus einem vorerwärmten Fleischmaterial

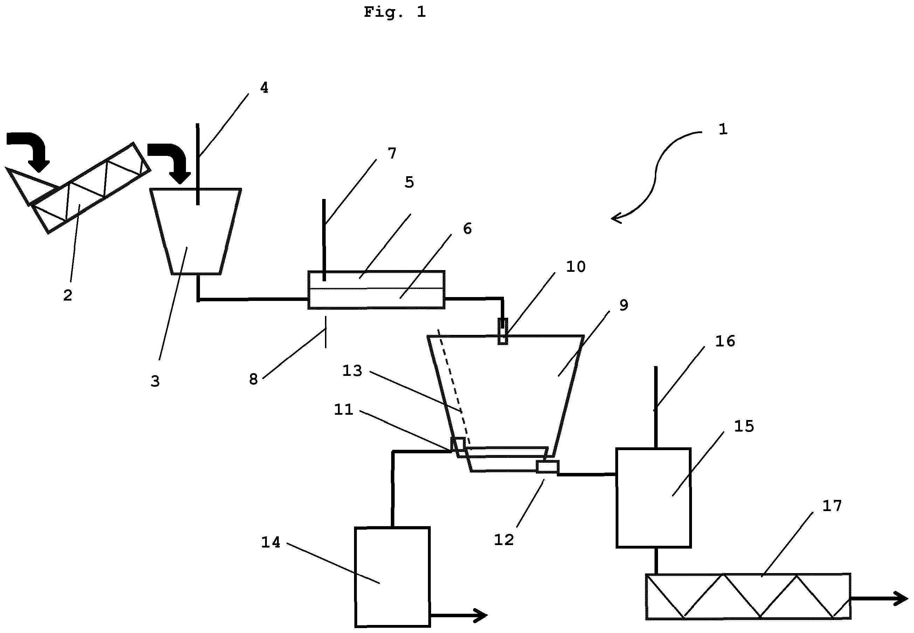

Fig. 1 zeigt eine schematische Ansicht einer Ausführungsform einer erfindungsgemässen Anlage 1 zur Herstellung von fleischhaltiger Tiernahrung.

Fleischmaterial wird (wie mit den dicken Pfeilen angedeutet) in eine Fördervorrichtung 2 wie einen Schneckenförderer in einen Zwischenlagerbehälter 3 gefördert. Alternativ kann das Material, beispielsweise aus einem Tankwagen, über eine Leitung 4 in den Zwischenlagerbehälter 3 gefördert (beispielsweise gepumpt) werden.

Von dem Zwischenlagerbehälter 3 wird das Material über eine Leitung, vorzugsweise ein Rohr in einen Schabewärmetauscher 5 geführt. Durch das innere Rohr 6 des Schabewärmetauschers 5 wird das zu erwärmende Fleischmaterial geleitet, während über eine Zuführleitung 7 Wasserdampf in den Schabewärmetauscher 5 eingeleitet wird, um das im Schabewärmetauscher 5 befindliche Material zu erwärmen, vorzugsweise auf 75-100°C, bevorzugt 90-100°C.

Der Wasserdampf verlässt den Schabewärmetauscher 5 durch die Abführleitung 8.

Das vorerwärmte Fleischmaterial gelangt durch den Einlass 10 in die Vorrichtung 9 zum Abtrennen von Feuchtigkeit und durchläuft diese unter Einfluss der Gravitation. Innerhalb der Vorrichtung 9 und im gezeigten Ausführungsbeispiel parallel zu einer Seitenwand der Vorrichtung 9 ist eine Abtrenneinheit 13 in Form einer Platter angeordnet, welche Perforationen einer Grösse aufweist, durch welche die Feuchtigkeit hindurchtreten kann, aber nicht das Fleisch. Dadurch gelangt die Feuchtigkeit in ein Kompartiment zwischen der Seitenwand der Vorrichtung 9 und der Abtrenneinheit 13 und verlässt die Vorrichtung 9 durch den Auslass 11. Durch eine Leitung, vorzugsweise ein Rohr, gelangt die abgetrennte Feuchtigkeit, vorzugsweise Leimwasser, in einen Lagerbehälter 14, wo sie bis zu einer allfälligen weiteren Verwendung aufbewahrt wird.

Das von der Feuchtigkeit getrennte Fleischmaterial gelangt durch einen Auslass 12 in einen Vorkonditionierer 15. Der Vorkonditionierer 15 wird aus einer Leitung 16 mit Wasserdampf versorgt. Nach erfolgter Vorkonditionierung gelangt das Fleischmaterial in einen Extruder 17, wo es zu dem gewünschten Nahrungsprodukt verarbeitet wird.

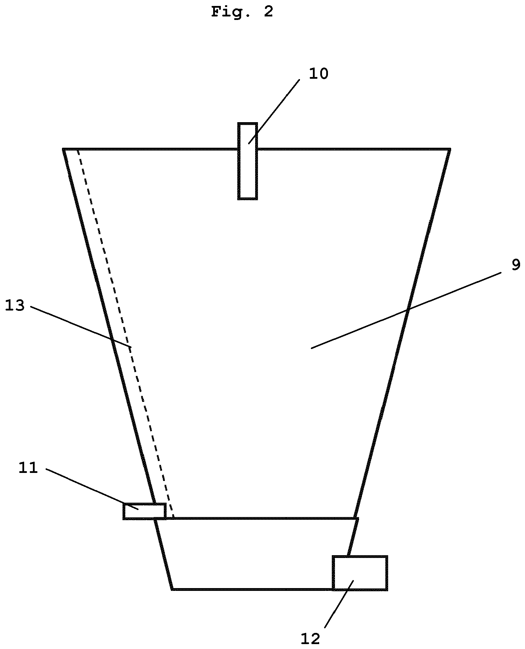

Fig. 2 zeigt eine schematische Ansicht einer Ausführungsform einer erfindungsgemässen Vorrichtung 9 zum Abtrennen von Feuchtigkeit aus einem vorerwärmten Fleischmaterial. Gleiche Bezugszeichen in den Figuren bezeichnen gleiche Komponenten. Hinsichtlich der Details der Vorrichtung 9 wird auf die Beschreibung der Fig. 1 verwiesen.

## Patentansprüche

1. Anlage (1) zur Herstellung von fleischhaltiger Tiernahrung, umfassend
- einen Anlagenteil (5) zur Vorerwärmung von Fleischmaterial,
- eine Vorrichtung (9) zum Abtrennen von Feuchtigkeit aus einem vorerwärmten Fleischmaterial mit
i. einem Einlass (10) für das vorerwärmte Fleischmaterial am oberen Ende der Vorrichtung (9)
ii. einer Abtrenneinheit (13) mit Perforationen zum Abtrennen von Feuchtigkeit vom vorerwärmten Fleischmaterial aufgrund der Schwerkraft, wobei die Abtrenneinheit (13) in der Vorrichtung angeordnet ist, insbesondere parallel zu einer Wandung der Vorrichtung (9), sodass zwischen der Wandung der Vorrichtung (9) und der Abtrenneinheit (13) ein Kompartiment zur Aufnahme der abgetrennten Feuchtigkeit ausgebildet ist,
iii. einem mit diesem Kompartiment verbundenen Auslass (11) für die abgetrennte Feuchtigkeit, und
iv. einem Auslass (12) für das von Feuchtigkeit befreite Fleischmaterial am unteren Ende der Vorrichtung (9), wobei der Einlass (10) der Vorrichtung (9) mit dem Anlagenteil (5) zur Vorerwärmung von Fleischmaterial über Zuführleitungen verbunden ist,
- einen Anlagenteil (15, 17) zur Weiterverarbeitung des von Feuchtigkeit befreiten Fleisches zu fleischhaltiger Tiernahrung.

2. Anlage nach Anspruch 1, **dadurch gekennzeichnet, dass** der Anlagenteil (5) zur Vorerwärmung von Fleischmaterial einen Schabewärmetauscher umfasst.

3. Anlage nach Anspruch 1 oder 2, **dadurch gekennzeichnet, dass** die Vorrichtung (9) zum Abtrennen von Feuchtigkeit trichterförmig ist.

4. Anlage nach einem der vorhergehenden Ansprüche, **dadurch gekennzeichnet, dass** die Abtrenneinheit (13) eine Perforationen aufweisende Platte ist, wobei die Perforationen eine Grösse aufweisen, durch welche die Feuchtigkeit hindurchtreten kann, aber nicht das Fleisch.

5. Anlage nach einem der vorhergehenden Ansprüche, **dadurch gekennzeichnet, dass** der Anlagenteil (15, 17) zur Weiterverarbeitung des von Feuchtigkeit befreiten Fleisches zu fleischhaltiger Tiernahrung eine Einheit umfasst, welche ausgewählt ist aus der Gruppe bestehend aus einem Extruder, einem Vorkonditionierer, und einer Kombination davon.

6. Anlage nach einem der vorhergehenden Ansprüche, **dadurch gekennzeichnet, dass** die Anlage (1) weiterhin einen Lagerbehälter (14) zur Aufnahme der abgetrennten Feuchtigkeit umfasst, welcher mit dem Auslass (12) für die abgetrennte Feuchtigkeit der Vorrichtung (9) zum Abtrennen von Feuchtigkeit verbunden ist.

7. Verfahren zur Herstellung von fleischhaltiger Tiernahrung, umfassend die Schritte:
a) Vorerwärmen von Fleisch, sodass Feuchtigkeit aus dem Fleisch entfernt wird,
b) Abtrennen des vorerwärmten Fleisches von der aus dem Fleisch entfernten Feuchtigkeit,
c) Verarbeitung des von der Feuchtigkeit abgetrennten Fleisches
**dadurch gekennzeichnet, dass** Schritt b) in einer eine Vorrichtung (9) zum Abtrennen von Feuchtigkeit umfassenden Anlage (1) gemäss einem der Ansprüche 1 bis 6 durchgeführt wird, wobei die Vorrichtung (9) umfasst:
i. einen Einlass (10) für das vorerwärmte Fleischmaterial am oberen Ende der Vorrichtung (9)
ii. eine Abtrenneinheit (13) mit Perforationen zum Abtrennen von Feuchtigkeit vom vorerwärmten Fleischmaterial aufgrund der Schwerkraft, wobei die Abtrenneinheit (13) in der Vorrichtung (9) angeordnet ist, insbesondere parallel zu einer Wandung der Vorrichtung (9), sodass zwischen der Wandung der Vorrichtung (9) und der Abtrenneinheit (13) ein Kompartiment zur Aufnahme der abgetrennten Feuchtigkeit ausgebildet ist,
iii. einen mit diesem Kompartiment verbundenen Auslass (11) für die abgetrennte Feuchtigkeit, und
iv. einen Auslass (12) für das von Feuchtigkeit befreite Fleischmaterial am unteren Ende der Vorrichtung (9).

8. Verfahren nach Anspruch 7, **dadurch gekennzeichnet, dass** das Verfahren in einer Anlage (1) gemäss einem der Ansprüche 1 bis 6 durchgeführt wird.

9. Verfahren nach Anspruch 7 oder 8, **dadurch gekennzeichnet, dass** die in Schritt b) abgetrennte Feuchtigkeit Leimwasser ist.

10. Verfahren nach Anspruch 9, **dadurch gekennzeichnet, dass** das Leimwasser gelagert wird, um anderweitig verwendet zu werden.

## Claims

1. Plant (1) for the production of meat-containing animal feed, comprising
- a plant section (5) for preheating meat material,
- a device (9) for separating moisture from a preheated meat material with
i. an inlet (10) for the preheated meat material at the upper end of the device (9)
ii. a separating unit (13) with perforations for separating moisture from the preheated meat material by virtue of gravity, wherein the separating unit (13) is arranged in the device, in particular parallel to a wall of the device (9), so that a compartment for receiving the separated moisture is formed between the wall of the device (9) and the separating unit (13),
iii. an outlet (11) for the separated moisture, which is connected to this compartment, and
iv. an outlet (12) for the meat material freed from moisture, at the lower end of the device (9), the inlet (10) of the device (9) being connected to the plant section (5) for preheating meat material via feed lines,
- a plant section (15, 17) for further processing of the meat freed from moisture into meat-containing animal feed.

2. Plant according to claim 1, **characterised in that** the plant section (5) for preheating meat material comprises a scraping heat exchanger.

3. Plant according to claim 1 or 2, **characterised in that** the device (9) for separating moisture is funnel-shaped.

4. Plant according to any one of the preceding claims, **characterised in that** the separation unit (13) is a plate having perforations, the perforations having a size through which the moisture can pass, but not the meat.

5. Plant according to any one of the preceding claims, **characterised in that** the plant section (15, 17) for further processing the meat freed from moisture into meat-containing animal feed comprises a unit selected from the group consisting of an extruder, a preconditioner, and a combination thereof.

6. Plant according to any one of the preceding claims, **characterised in that** the plant (1) further comprises a storage container (14) for receiving the separated moisture, which is connected to the outlet (12) for the separated moisture of the device (9) for separating moisture.

7. A process of producing meat-containing animal feed comprising the steps of:
a) Preheating meat so that moisture is removed from the meat,
b) Separating the preheated meat from the moisture removed from the meat,
c) Processing of the meat separated from the moisture **characterised in that** step b) is carried out in a plant (1) comprising a device (9) for separating moisture according to any one of claims 1 to 6, wherein the device (9) comprises:
i. An inlet (10) for the preheated meat material at the upper end of the device (9).
ii. a separating unit (13) with perforations for separating moisture from the preheated meat material by virtue of gravity, wherein the separating unit (13) is arranged in the device (9), in particular parallel to a wall of the device (9), so that a compartment for receiving the separated moisture is formed between the wall of the device (9) and the separating unit (13),
iii. an outlet (11) for the separated moisture, which is connected to this compartment, and
iv. an outlet (12) for the meat material freed from moisture, at the lower end of the device (9).

8. Process according to claim 7, **characterised in that** the process is carried out in a plant (1) according to any one of claims 1 to 6.

9. Process according to claim 7 or 8, **characterised in that** the moisture separated in step b) is stick water.

10. Process according to claim 9, **characterized in that** the stick water is stored to be used elsewhere.

## Revendications

1. Installation (1) pour la production d'aliments pour animaux contenant de la viande, comprenant
- une section d'installation (5) pour préchauffer la viande,
- un dispositif (9) pour séparer l'humidité d'un matériau de viande préchauffé avec
i. une entrée (10) pour le matériau de viande préchauffé à l'extrémité supérieure du dispositif (9)
ii. une unité de séparation (13) avec des perforations pour séparer par gravité l'humidité du matériau de viande préchauffé, l'unité de séparation (13) étant disposée dans le dispositif, en particulier parallèlement à une paroi du dispositif (9), de sorte qu'un compartiment pour recevoir l'humidité séparée est formé entre la paroi du dispositif (9) et l'unité de séparation (13),
iii. une sortie (11) pour l'humidité séparée reliée à ce compartiment, et
iv. une sortie (12) pour le matériau de viande débarrassé de l'humidité à l'extrémité inférieure du dispositif (9), l'entrée (10) du dispositif (9) étant reliée à la section d'installation (5) pour préchauffer du matériau de viande par des conduites d'alimentation,
- une section de l'installation (15, 17) pour la transformation ultérieure de la viande débarrassée de l'humidité en aliments pour animaux contenant de la viande.

2. Installation selon la revendication 1, **caractérisée en ce que** la section de l'installation (5) pour préchauffer du matériau de viande comprend un échangeur de chaleur à raclage.

3. Installation selon la revendication 1 ou 2, **caractérisée en ce que** le dispositif (9) pour séparer l'humidité est en forme d'entonnoir.

4. Installation selon l'une quelconque des revendications précédentes, **caractérisée en ce que** l'unité de séparation (13) est une plaque comportant des perforations, les perforations étant d'une taille permettant le passage de l'humidité, mais pas de la viande.

5. Installation selon l'une quelconque des revendications précédentes, **caractérisée en ce que** la section de l'installation (15, 17) pour la transformation ultérieure de la viande débarrassée de l'humidité en aliments pour animaux contenant de la viande comprend une unité choisie dans le groupe constitué par une extrudeuse, un préconditionneur et une combinaison de ceux-ci.

6. Installation selon l'une quelconque des revendications précédentes, **caractérisée en ce que** l'installation (1) comprend en outre un récipient de stockage (14) pour recevoir l'humidité séparée, qui est relié à la sortie (12) pour l'humidité séparée du dispositif pour séparer d'humidité (9) .

7. Procédé de production d'aliments pour animaux contenant de la viande, comprenant les étapes suivantes :
a) Préchauffez la viande de façon à ce que l'humidité soit éliminée de la viande,
b) Séparer la viande préchauffée de l'humidité retirée de la viande,
c) Traitement de la viande séparée de l'humidité **caractérisé en ce que** l'étape b) est réalisée dans une installation (1) comprenant un dispositif pour séparer d'humidité (9) selon l'une quelconque des revendications 1 à 6, dans lequel le dispositif (9) comprend:
i. une entrée (10) pour le matériau de viande préchauffé à l'extrémité supérieure du dispositif (9)
ii. une unité de séparation (13) avec des perforations pour séparer par gravité l'humidité du matériau de viande préchauffé, l'unité de séparation (13) étant disposée dans le dispositif (9), en particulier parallèlement à une paroi du dispositif (9), de sorte qu'un compartiment pour recevoir l'humidité séparée est formé entre la paroi du dispositif (9) et l'unité de séparation (13
iii. une sortie (11) pour l'humidité séparée reliée à ce compartiment, et
iv. une sortie (12) pour le matériau de viande débarrassé de l'humidité à l'extrémité inférieure du dispositif (9) .

8. Procédé selon la revendication 7, **caractérisé en ce que** le procédé est mis en œuvre dans une installation (1) selon l'une des revendications 1 à 6.

9. Procédé selon la revendication 7 ou 8, **caractérisé en ce que** l'humidité séparée à l'étape b) est de l'eau de colle.

10. Procédé selon la revendication 9, **caractérisé en ce que** l'eau de colle est stockée pour être utilisée ailleurs.
